Europäisches Patentamt

European Patent Office

Office européen des brevets

(11) Veröffentlichungsnummer: **0 307 883**
**A2**

(12) **EUROPÄISCHE PATENTANMELDUNG**

(21) Anmeldenummer: **88115010.6**

(51) Int. Cl.⁴: **B25J 9/18**

(22) Anmeldetag: **14.09.88**

(30) Priorität: **18.09.87 DE 3731452**

(43) Veröffentlichungstag der Anmeldung:
**22.03.89 Patentblatt 89/12**

(84) Benannte Vertragsstaaten:
**AT DE ES FR GB IT**

(71) Anmelder: **SMS Hasenclever GmbH**
**Witzelstrasse 55**
**D-4000 Düsseldorf 1(DE)**

(72) Erfinder: **Kutz, Heinrich**
**Vossenackerstrasse 41**
**D-4040 Neuss(DE)**

(74) Vertreter: **Pollmeier, Felix et al**
**Patentanwälte**
**HEMMERICH-MÜLLER-GROSSE-POLLMEIER--**
**MEY Eduard-Schloemann-Strasse 47**
**D-4000 Düsseldorf 1(DE)**

(54) **Integrierte Steuerung für einen Manipulator und eine mit diesem zusammen wirkende Freiform-Schmiedepresse sowie Manipulator mit Messvorrichtung hierzu.**

(57) Die Zangenträger von beim Freiformschmieden eingesetzten Manipulatoren für die Schmiedestücke werden entweder zusammen mit dem Manipulatorwagen in "Wagenschritten" oder bei etwa gleichmäßig verfahrendem Manipulatorwagen gegenüber diesem in "Zangenschritten" bewegt. Die Schwerfälligkeit des "Wagenschrittes" und die Schwierigkeiten der Abstimmung des "Zangenschritts" werden erfingungsgemäß durch eine Steuerung überwunden, welche die Geschwindigkeit des Zangenträgers (2) beim Erfassen des Schmiedestückes (20) durch die Werkzeuge (18,19) annähernd auf Null ($\leq \approx 30$ mm/s) absenkt und das Beschleunigen und Verzögern des gegenüber dem Wagen (1) frei positionierten Zangenträgers (2) aus Positionssignalen des Zangenträgers (2) bezogen auf die Presse und aus den Betriebsdaten der Presse steuert. Der Manipulator besitzt einen insbesondere als Gleichlaufzylinder mit durchgehender Kolbenstange (12) ausgebildeten Verschiebezylinder (11) mit einem durchgehenden Kolbenweg für den gesamten Bewegungsspielraum des Zangenträgers (2). Ferner ist zwischen Wagen 1 und Zangenträger (2) eine Wegmeßeinrichtung angeordnet, die die raltive Position des Zangenträgers (2) bezogen zum Wagen (1) sowohl in vertikaler als auch in horizontaler Fahrtrichtung mißt und deren Meßergebnisse zu den Wagenweg-Werten addiert die genaue oder annähernd genaue Position bezogen zur Presse darstellt.

Fig. 4

## Integrierte Steuerung für einen Manipulator und eine mit diesem zusammenwirkende Freiform-Schmiedepresse sowie Manipulator mit Meßvorrichtung hierzu.

Häufigste Arbeit beim Freiformschmieden ist das Ausschmieden (Recken) und Schlichten von langen Schmiedestücken. Dabei ist es erforderlich, das Schmiedestück zwischen den Schmiedehüben mit möglichst gleich großen, genau plazierten Schritten in möglichst kurzer Zeit in Längsrichtung zu transportieren, denn von der Gleichmäßigkeit und genauen Plazierung der Schmiedeschritte (Bisse) hängt in hohem Maße die Materialqualität als Folge guter und gleichmäßiger Durchschmiedung bei oberflächenschonender Behandlung, sowie die maßliche Qualität der Schmiedestücke ab, während die Manipulierzeiten die in einer Hitze möglichen Arbeitsausführungen entscheidend beeinflussen. Zum Manipulieren der Schmiedestücke in Freiform- Schmiedepressen werden Manipulatoren eingesetzt, die aus einem auf die Schmiedepresse zu und von ihr weg bewegbaren Manipulatorwagen und einem das Schmiedestück mit seiner Zange aufnehmenden im Manipulatorwagen in Bewegungsrichtung desselben pendelnd aufgehängten Zangenträger bestehen. Zur Bewegung des Zangenträgers mit dem Schmiedestück gibt es zwei Möglichkeiten:

1. Der Zangenträger wird in Längsrichtung zum Manipulatorwagen fixiert und Zangenträger und Manipulatorwagen führen gemeinsam den Schritt aus, der hier als "Wagenschritt" bezeichnet sei.

2. Der Manipulatorwagen fährt mit annähernd gleichmäßiger Geschwindigkeit und der pendelnde Zangenträger führt den Transportschritt, den sogenannten "Zangenschritt" aus.

Um in beiden Fällen in der gleichen Zeit $t_m$ den gleichen Schritt $s_m$ ausführen zu können, wird bei dem im Wagenschritt arbeitenden Manipulatoren den zu beschleunigenden Massen entsprechend ein etwa zwei bis drei mal stärkerer Antrieb benötigt als bei den im Zangenschritt arbeitenden Manipulatoren und es ist verständlich, daß die Entwicklung der letztgenannten Manipulatoren mit erheblichen Bemühungen betrieben wurde, da diese schnelle Schritte bei geringen Kräften und Energien ermöglichen.

Die einfachste Möglichkeit für einen Zangenschritt besteht darin, den Zangenträger antriebslos pendeln zu lassen. Dabei wird das Schmiedestück durch die Presse festgehalten, während der Manipulatorwagen weiterfährt. Die Pendel geraten dabei in eine erwünschte Schräglage. Das Schmiedestück wird durch Rückzug des Oberwerkzeuges frei und schwingt dem Manipulatorwagen folgend zurück. Die Größe des Schrittes wird durch die zuvor erreichte Schräglage und den Zeitpunkt des Wiederauftreffend des Oberwerkzeuges auf das Schmiedestück mit dem erneuten "Einfangen" durch die Schmiedepresse bestimmt. Eine genaue Steuerung ist hier sowohl von Hand als auch steuerungsautomatisch nicht möglich. Ferner treten hohe Horizontalkräfte beim "Einfangen" des Blockes, der sich mit bis zu 800 mm/s Endgeschwindigkeit bewegt, auf. Mit sehr hohen Senkgeschwindigkeiten des Oberwerkzeuges versucht man die Möglichkeit zu verbessern, das Schmiedestück im richtigen Zeitpunkt wieder zu fassen (einzufangen), was zusätzliche Erschütterungen und Umweltbelastungen verursacht. Trotz dieser Nachteile wird nach dieser Methode auch heute noch, selbst mit modernen Manipulatoren gefahren, weil sie in ihrer Schnelligkeit der Schritte unerreicht sind.

Bei anderen Lösungen wird die Zange nicht mittels Schwerkraft, sondern mit besonderen Antriebsmitteln bewegt und gesteuert. In der Regel geschieht das hydraulisch mittels Koben- Zylinder-Einheiten, die im Manipulatorwagen gelenkig befestigt sind. Dabei wird der Manipulatorwagen über seinen Fahrantrieb mit einer bestimmten Geschwindigkeit und der Zangenträger über die Kolben-Zylinder- Einheiten mit einem bestimmten Schwingausschlag der ihn tragenden Pendel, also einem bestimmten Weg entsprechend des gewünschten Schrittes $s_m$ und der zu erwartenden Zeit fur einen Pressenzyklus bewegt. Für eine kontrollierte Mittelstellung des Zangenträgers wird eine Hubbegrenzung der Kolben in den Betätigungszylindern bevorzugt, oder sie wird durch entsprechende Endschalter markiert. Die Schaltpunkte für Beschleunigungen, Umschalten auf Bremsen und Halten liegen im Manipulatorwagen, wodurch der Zwang besteht, den Manipulatorwagen kontrolliert und genau korrespondierend zum Pressenzyklus zu fahren. Das heißt, es müssen folgende drei Parameter immer in Übereinstimmung gebracht werden:

1. Aufsetzzeitpunkt des Obersattels

2. Position des Manipulatorwagens zu diesem Zeitpunkt

3. Position des Zangenträgers im Manipulatorwagen zu diesem Zeitpunkt.

Geringe Änderungen der Betriebsverhältnisse, z.B. Blockgewicht, Tragmomente, Hubzahl je min., Eindringtiefen, Betriebsöltemperaturen etc. erfordern abweichende Einstellungen. Zu häufig gerät dieser "Zangenschritt" außer Tritt; besonders bei kleinen schnellen Schritten. Das führt dazu, daß solche Einrichtungen sehr häufig nicht benutzt werden.

Es sind ferner Manipulatoren mit hydraulischen Kolben-Zylinder-Einheiten als Antriebsmittel für den Zangenträger bekannt, deren Kolben im Zylinder frei beweglich ist, also keine mechanisch oder elektrisch markierte Mittenstellung im Manipulatorwagen besitzt (DE-PS 1296596). Dabei erfolgt die Steuerung im Pressenzyklus, durch Wegsignale des Manipulatorwagens oder von Hand. Abweichungen der Wagenfahrt vom mittleren theoretischen Wert führen zwar nicht zur Funktionsstörung, bewirken aber eine unregelmäßige Schrittfolge.

Die Erfindung bezieht sich auf einen mit einer Freiform- Schmiedepresse zusammenwirkenden Manipulator, dessen Manipulatorwagen kontinuierlich verfahren wird und dessen das Schmiedestück mit seiner Zange aufnehmender Zangenträger im Manipulatorwagen pendelnd aufgehängt ist und mit Unterbrechung während des Kontaktes des Schmiedestückes mit den Schiedesätteln (-werkzeugen) bewegt wird, der also im Zangenschritt betrieben wird, als Voraussetzung für in schneller Folge durchzuführende Schritte, und hat als Aufgabe eine Ausbildung der Steuerung für das Zusammenwirken von Freiform- Schmiedepresse und Manipulator, die die Ausführung der Schritte in hoher Gleichmäßigkeit bei genauer Plazierung und geringen Manipulierzeiten gewährleistet.

Zur Lösung der Aufgabe, wird nicht der schwierige Versuch unternommen, Zangenträger und Wagen im Pressenzyklus stets wiederkehrend in eine bestimmte Position zueinander zu bringen, sondern es wird erfindungsgemäß in unabhängig von einer bestimmten Position des Manipulatorwagens, abhängig von dem Abstand des Zangenträgers zur Schmiedepresse mit dem Entlasten der Schmiedepresse beginnenden Zyklen, der Beschleunigung und der Fahrt des Zangenträgers nach dem Durchfahren eines Schaltweges $s_S$ folgend die Abbremsung des Zangenträgers so eingeleitet, daß der Zangenträger sich gegenüber der Presse nahezu in Ruhelage befindet wenn die Manipulierzeit $t_m$ abgelaufen bzw. die Arbeitsbereitschaft der Presse (durch ein entsprechendes Steuersignal, das Passieren des "slow- down Punktes" oder den Druckanstieg im Presszylinder) angezeigt ist und die Schmiedewerkzeuge das Werkstück greifen, wobei aus dem Vergleich des Sollwertes $s_{soll}$ mit dem Istwert $s_i$ des Zangenschrittes eine Korrektur des Schaltweges $s_{S (i+1)}$ im folgenden Zyklus, aus der positiven oder negativen Zwangengeschwindigkeit $v_z$ eine Korrektur des Schaltpunktes $h_s$ für die obere Hubumkehr der Presse und durch den sich aus dem Vergleich des Zangenweges $z_{z i}$ und des Weges $s_{w i}$ des Manipulatorwagens ergebenden positiven oder negativen Wert $\Delta s$ und der Zeit $T_i$ des Zyklus eine Korrektur der Fahrgeschwindigkeit $v_w$ des Manipulatorwagens abgeleitet wird.

Bei der erfindungsgemäßen Steuerung wird also innerhalb eines jeden Zyklus, der mit dem Entlasten der Schmiedeprsse und damit der Freigabe des Schmiedestückes beginnt, zunächst der Zangenträger beschleunigt und verfahren, bis ein Schaltweg $s_s$ durchfahren ist, ab dem die Abbremsung des Zangenträgers erfolgt. Die Steuerung wählt diesen Schaltweg so, daß sich der Zangenträger gegenüber der Presse möglichst, d.h. nahezu in Ruhelage befindet, wenn die Schmiedewerkzeuge das Werkstück wieder greifen, so daß Stöße aus Horizontalkräften beim "Einfangen" des Werkstückes nicht auftreten. Durch Vergleich des Sollwertes $s_{soll}$ des Zangenträgervorschubes mit dem Istwert $s_i$ wird die Konstanz des Schrittes und die genaue Plazierung des Werkstückes in der Schmiedepresse gesteuert durch Verkürzung oder Verlängerung des Schaltweges. Damit das "Einfangen" zu einem Zeitpunkt erfolgt, wenn das Sollmaß $s_{soll}$ des Zangenträgervorschubes erreicht ist wird die Hubumkehr der Presse in Abhängigkeit davon gesteuert, ob beim Aufsetzen der Schmiedewerkzeuge sich das Werkstück in Ruhe befindet, wobei eine positive oder negative Zangengeschwindigkeit $v_z$ die Rück- oder Vorverlegung des Umkehrpunktes der Presse steuert. Lediglich zur Minimierung des Pendelausschlages des Zangenträgers im Manipulatorwagen wird durch Vergleich des während eines Zyklus zurückgelegten Zangenweges $z_{z i}$ mit dem in der gleichen Zeit zurückgelegten Wagenweg $s_{w i}$ die positive oder negative Wegdifferenz $\Delta s$ festgestellt und in Abhängigkeit hiervor die Fahrgeschwindigkeit $v_w$ des Manipulatorwagens gesteuert.

Die erfindungsgemäße Steuerung erfolgt in Abhängigkeit des Abstandes des Zangenträgers von der Schmiedepresse. Die Ermittlung dieses Abstandes erfolgt gemäß einem weiteren Merkmal der Erfindung wie bekannt durch eine die Position des Zangenträgers im Manipulatorwagen messende Vorrichtung und eine den Abstand des Manipulatorwagens zur Schmiedepresse messende Vorrichtung sowie Summierung der Meßwerte. (DE-PS 28 13 639)

Der bauliche Aufwand und Raumbedarf läßt sich verhältnismäßig gering halten, wenn als Fahrantrieb des Manipulatorwagens ein ölhydraulischer Motor vorgesehen wird, der zusammen mit den zur Verschiebung des Zangenträgers im Manipulatorwagen vorgesehenen Kolben- Zylinder-Einheiten von der zentralen aus elektromotorisch angetriebener Druckölpumpe mit Druckölspeicher bestehender Druckölstation im Manipulatorwagen versorgt ist. Obgleich die erfindungsgemäße Steuerung unabhängig von einer bestimmten Position des Manipulatorwagens erfolgt, ist es dennoch vorteilhaft für eine Stabilität des Fahrantriebes zu sorgen, indem den Reaktionskräften der Verschiebung des Zangenträgers bei dessen Beschleunigung und Verzögerung sowie der horizontalen Reaktionskraft der Zangenträgeraufhängung in Pendelstangen entgegengewirkt wird. Gemäß einem weiteren Merkmal der Erfindung ist daher vorgesehen, daß die Fahrgeschwindigkeit des Manipulatorwagens über einen mit dem Fahrantrieb verbundenen Tachogenerator in Verbindung mit einem Regel- und einem Drosselventil annähernd konstant gehalten wird, indem am Motor des Fahrantriebes während der Beschleunigung des Zangenträgers der Eingangsdruck erhöht und der Ausgangsdruck gesenkt und während der Verzögerung des Zangenträgers der Eingangsdruck gesenkt und der Ausgangsdruck erhöht wird.

Merkmal eines im Rahmen der Erfindung bevorzugt verwendeten Manipulators sind die den Zangenträger im Manipulatorwagen bewegenden Kolben-Zylinder- Einheiten, die an sich bekannte, beidseitig beaufschlagbare Kolben mit durchgehenden Kolbenstangen und Zylinder mit durchgehenden, den maximalen Pendelausschlag des Zangenträgers zulassenden Bohrungen aufweisen, deren durch die Kolben getrennte Zylinderräume mit ihren Anschlüssen über ein Steuerventil wahlweise beaufschlagbar oder miteinander verbindbar sind, (DE-PS 1296 596). Ist der Manipulator mit einem ölspeicherbetriebenen Fahrmotor versehen, so ist nach einem weiteren Merkmal der Erfindung in der Rücklaufleitung vom Fahrmotor ein von einem die Fahrgeschwindigkeit registrierenden, mit dem Fahrmotor gekuppeltem Tachogenerator geregeltes Drosselventil angeordnet, und von der Rücklaufleitung zwischen einem dem Fahrmotor vorgeschaltetem Steuerventil und dem Drosselventil ist eine Steuerleitung abgezweigt, die mit einem in der Zulaufleitung vor dem Steuerventil angeordneten, durch hydraulischen Druck aus der Steuerleitung entsperrbaren Regelventil verbunden ist.

Die erfindungsgemäße Steuerung setzt eine ständige und genaue Erfassung der Position des Zangenträgers zur Schmiedepresse voraus, die aus der Summe des Abstandes des Manipulatorwagens zur Schmiedepresse und des aus der Position des Zangenträgers im Manipulatorwagen ermittelten Abstandes gebildet ist. Der Abstand des Manipulatorwagens zur Schmiedepresse ist einfach zu messen und es ist beispielsweise durch die DE- PS 2813639 eine Meßvorrichtung zur Bestimmung der Position des Zangenträgers zum Manipulatorwagen bekannt. Die zur Bestimmung der Position des Zangenträgers zum Manipulator erfolgende Längenmessung muß jedoch um eine Winkelmessung ergänzt und über eine Winkelfunktion verrechnet werden, was eine gewisse Schwerfälligkeit der Abstandsermittlung zur Folge hat. Eine weitere Aufgabe im Rahmen der Erfindung besteht in der Ausbildung der Meßvorrichtung zur direkten Bestimmung der Position des Zangenträgers im Manipulatorwagen. Gemäß einem weiteren Merkmal der Erfindung besteht die Meßvorrichtung aus einem Parallelgestänge, dessen Gelenkpunkt die Zangenbewegung in wesentlich kleinerem Maßstab abbildet, sowie aus zwei Wegaufnehmern, die aus je einem Stößel mit Zahnstange bestehen, die dem Gelenkpunkt der eine horizontal und der andere vertikal folgen und deren Zahnstangen elektronische Wegaufnehmer antreiben, wobei die Stößel durch Federkraft gegen den Gelenkpunkt gerichtet werden, oder durch im Gelenkpunkt gelagerte Gleitsteine, die in entsprechenden Kulissen der Stößel eingreifen, mitgenommen werden.

Ein Ausführungsbeispiel ist in Abwandlungen anhand der Zeichnungen beschrieben.

Figur 1,2 und 3 zeigen schematisch den Manipulator in der
Beschleunigungsphase (Figur 1)
in der Bremsphase (Figur 2) und
in der Schmiedephase (Figur 3)

Figur 4 zeigt das Prinzip der Wegmessung, wozu die

Figuren 5, 6, 7, 8 und 9 Ausführungsbeispiele von Meßvorrichtungen für die Position des Zangenträgers im Manipulatorwagen zeigen.

Figur 10 zeigt das Schema eines gemeinsamen ölspeicherbetriebenen Fahrantriebes mit Zangenverschiebung, während

Figur 11 das Schema einer Abwandlung zeigt, bei dem nur die Zangenverschiebung ölspeicherbetrieben ist, während der Fahrantrieb getrennt von einer Regelpumpe betrieben ist.

Figur 12 ist ein Schaubild von Weg- Kraftund Druckverläufen während eines Zangenschrittes und

Figur 13 ist ein Zeit- Weg- Schemabild über mehrere Zangenschritte.

Figur 14 zeigt ein Blockschaltbild der Steuerung.

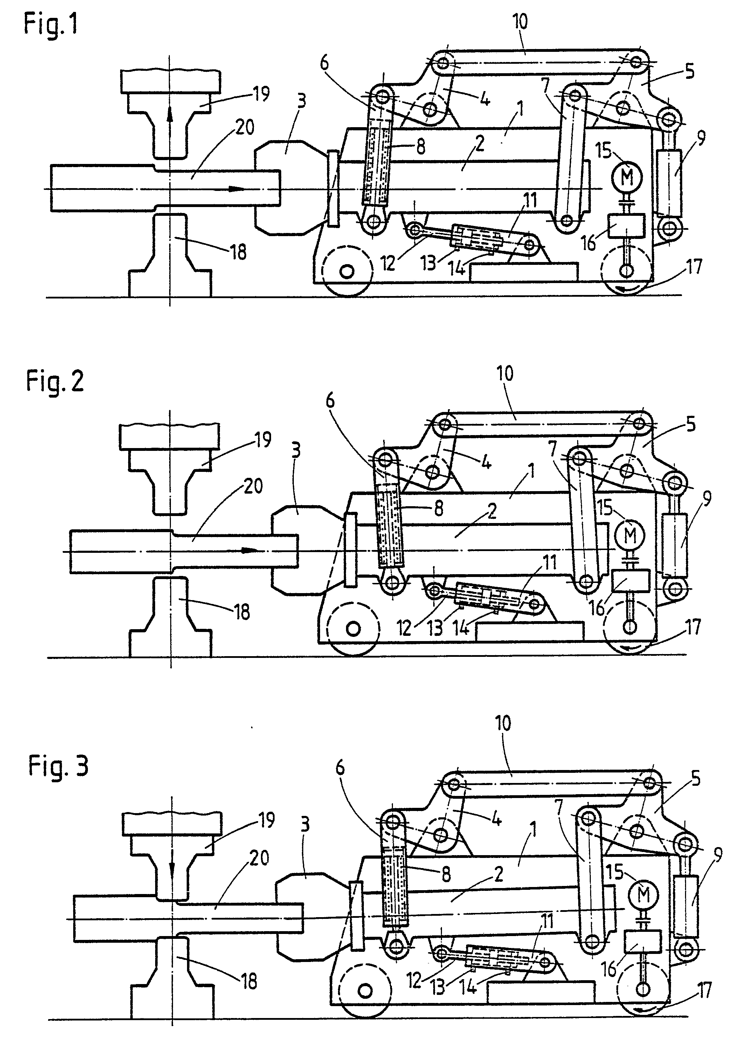

In den Figuren 1 bis 3 ist ein Manipulator dargestellt, der aus einem Wagen 1 und einem im Wagen 1 beweglichen Zangenträger 2 mit Zange 3 besteht. Der Zangenträger 2 wird von Pendeln 6 und 7 getragen, die hierzu gelenkig mit dem Zangenträger 2 und mit den einen Armen von im Wagen 1 schwenkbar gelagerten Winkelhebeln 4 und 5 verbunden sind. Die beiden vorderen Pendel 6 schließen Kolben- Zylinder- Einheiten ein, so daß sie hydrauliche Federn 8 bilden. Die hinteren Winkelhebel 5 sind dreiarmig ausgeführt und an die dritten Arme greifen Zugzylinder 9 an. Mittels Zugstangen 10 sind die Winkelhebel 4 und 5 an ihren zweiten Armen verbunden, so daß sich die Winkelhebel 4 und 5 gleichläufig gleichsinnig bewegen. Mittels der Zugzylinder 9 sind die Winkelhebel 4 und 5 schwenkbar und damit der Zangenträger 2 über die Pendel 6 und 7 heb- und senkbar, wobei die Pendel 6 und 7 zugleich die horizontale Bewegung des Zangenträgers 2 erlauben. Gelenkig mit dem Wagen 1 verbundene Zylinder 11 mit Kolben, deren Kolbenstangen 12 gelenkig mit dem Zangenträger 2 verbunden sind, bewirken entsprechend der Kolbenbeaufschlagung über hierzu vorgesehene Anschlüsse 13 und 14 die horizontale Bewegung des Zangenträgers 2. Der Wagen 1 ist desweiteren mit einem Fahrantrieb versehen, der aus einem hydraulischen oder elektrischen Antriebsmotor 15 einem Übersetzungsgetriebe 16 und Antriebsrädern 17 besteht.

Die Figur 1 zeigt den Manipulator zu Beginn der Beschleunigungsphase. Die aus einem Untersattel 18 und einem Obersattel 19 bestehende Schmiedewerkzeuge haben soeben durch Anheben des Obersattels 19 das Schmiedestück 20 freigegeben und der Zangenträger 2 mit dem Schmiedestück 20 sind von den hydraulischen Federn 8 oder durch gesteuerte Beaufschlagung der Kolben in den Zugzylindern 9 in die für ihre Manipulation geeignete Höhenlage verbracht worden. Da das Schmiedestück 20 bis zu seiner Freigabe von den Schmiedewerkzeugen 18 und 19 festgehalten wurde, ist der Wagen 1, der kontinuierlich entsprechend der angezeigten Drehrichtung der Räder 17 fährt, gegenüber dem Zangenträger 2 vorgeeilt, wobei die Anschlüsse 13 und 14 der Zylinder 11 miteinander verbunden waren. Mit der Freigabe des Schmiedestückes 20 erfolgt die Beaufschlagung der Kolben in den Zylindern 11 über die Anschlüsse 13, während über die Anschlüsse 14 eine Druckentlastung der entgegengesetzten Kobenseite erfolgt.

Sobald der Zangenträger 2 mit dem Schmiedestück 20 einen dem vorgesehenen Schmiedeschritt abzüglich des Bremsweges entsprechenden Weg ab seiner Freigabe zurückgelegt hat, wird die in Figur 2 dargestellte Bremsphase eingeleitet, indem über die Anschlüsse 14 die entgegengesetzen Kolbenseiten im Zylinder 11 druckbeaufschlagt sind die über die Anschlüsse 13 versorgten Kolbenseiten druckentlastet werden. Einhergehend mit der Abbremsung des Zangenträgers 2 mit dem Schmiedestücke 20 wird auch die Hubumkehr der Presse so eingeleitet, daß der Obersattel 19 im Zusammenwirken mit dem Untersattel 18 das Schmiedestück 20 wieder einfängt zu dem Zeitpunkt, in welchem der vorgesehene Schmiedeschritt erreicht ist und das Schmiedestück 20 ganz oder nahezu zum Stillstand ($v_z \leq \approx 30$ mm/s) gekommen ist.

Hiermit beginnt die in Figur 3 dargestellte Schmiedephase, in der das Schmiedestück 20 zwischen den Schmiedewerkzeugen 18 und 19 eingeklemmt ist und während der die Anschlüsse 13 und 14 des Zylinders 11 miteinander verbunden sind, so daß sich die Kolben in den Zylindern 11 frei bewegen können.

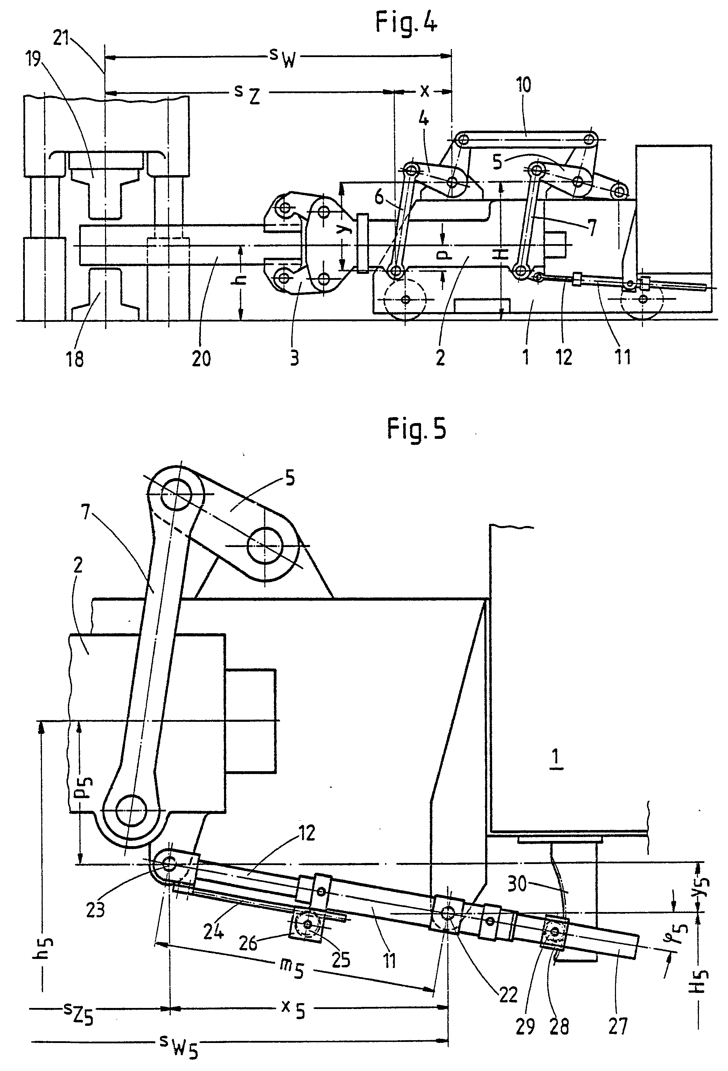

Wie aus Figur 4 ersichtlich, wird die Position des Schmiedestückes 20 relativ zur Schmiedepresse ermittelt, indem der Abstand des Wagens 1 zur Schmiedepresse und die Position des Zangenträgers 2 im Wagen 1 gemessen werden. Hierzu ist ein Festpunkt im Wagen 1, zum Beispiel die Mitte der Schwenkachse der Winkelhebel 4 angenommen, von dem aus der Abstand $s_w$ zur Mittenlinie 21 der Schmiedepresse und der horizontale Abstand x eines Festpunktes am Zangenträger 2 gemessen werden, wobei sich der Abstand des Festpunktes am Zangenträger 2 zur Mittellinie 21 der Schmiedepresse mit $s_z = s_w - x$ ergibt. Von dem gleichen Festpunkt im Wagen 1 ausgehend wird auch die Höhenlage der Mitte des Schmiedestückes 20 zur Hüttenflur durch Messung des vertikalen Abstandes y zwischen den Festpunkten im Wagen 1 und am Zangenträger 2 ermittelt, wobei sich die Höhenlage h bei einem Abstand H des Festpunktes im Wagen 1 zur Hüttenflur und einem Abstand p der Mitte des Zangenträgers 2 zum Festpunkt am Zangenträger 2 ergibt zu $h = H - y + p$. Andere Festpunkte im Wagen 1, beispielsweise die Schwenkachse der Winkelhebel 5, und am Zangenträger 2 können sinngemäß gewählt werden, wie dies die Ausführungsbeispiele von Meßvorrichtungen nach den Figuren 5, 6 und 7 zeigen.

So ist die in Figur 5 dargestellte Meßvorrichtung mit einem der Zylinder 11 mit Kolben und Kolbenstange 12 zur Verschiebung des Zangenträgers 2 in der Ausführung nach Figur 4 verbunden, wobei der Bolzen 22 zur Verbindung des Zylinders 11 und dem Wagen 1 dem Festpunkt der Meßvorrichtung im Wagen 1 und der Bolzen 23 zur Verbindung der Kolbenstange 12 mit dem Zangenträger 2 den Festpunkt der Meßvorrichtung am Zangenträger 2 bildet. Mit dem Kopfstück der Kolbenstange 12 ist eine Zahnstange 24 verbunden, die in ein Ritzel 25 eingreift, welches in einem mit dem Zylinder 11 verbundenen Gehäuse 26 gelagert ist und ein Zählwerk antreibt, welches den Mittenabstand $m_s$ der Verbindungsbolzen 22 und 23 anzeigt. Der Zylinder 11 ist durch einen das freie Ende der Kolbenstange 12 aufnehmenden Rohrstutzen 27 verlängert, an dem ein Gehäuse 28 befestigt ist, in dem ein Ritzel 29 gelagert ist. An dem Wagen 1 ist ein Zahnsegment 30 zentrisch zum Verbindungsbolzen 22 befestigt, in das das Ritzel 29 eingreift. Über das Ritzel 29 wird ein Winkelmesser angetrieben, der den Winkel $\phi_s$ anzeigt, so daß sich aus dem Mittenabstand $m_s$ und dem Winkel $\phi_s$ der Wert $x_s = m_s \cdot \cos \phi_s$ und der Wert $y_s = m_s \cdot \sin \phi_s$ errechnen lassen zur Bestimmung von

$$s_{z5} = s_{w5} - x_5 \text{ und } h_5 = H_5 + y_5 + p_5$$

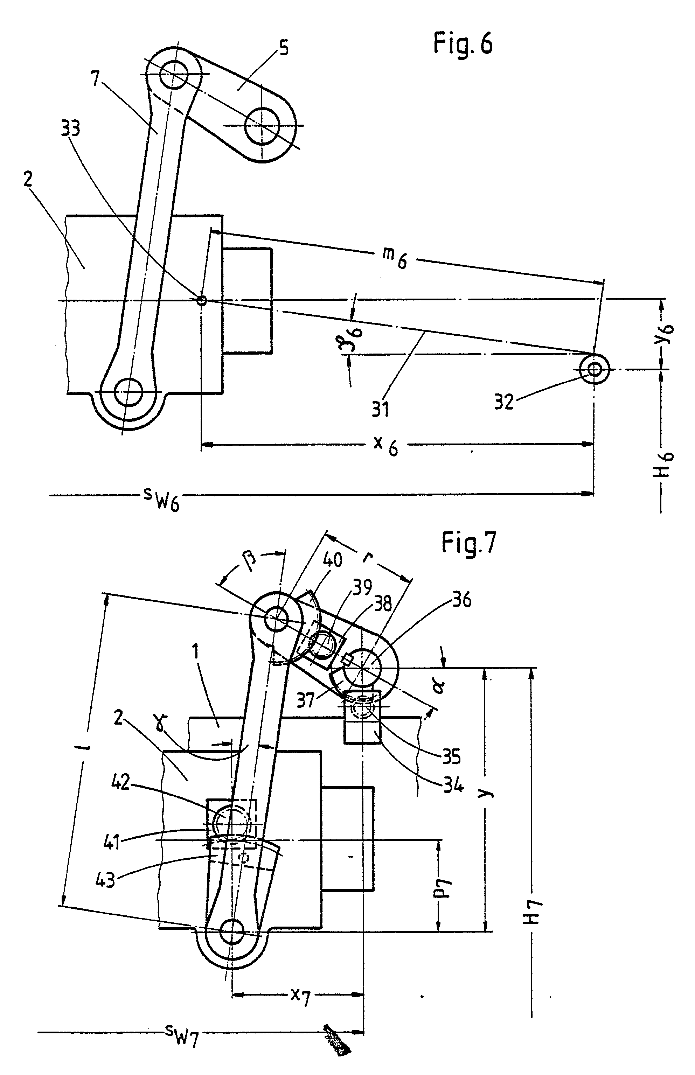

Die baulich sehr einfache, in Figur 6 dargestellte Meßvorrichtung besteht aus einem Seil 31 welches von einer Rolle 32 aufgewickelt und unter Spannung gehalten wird, die in einem nicht dargestellten, am Wagen 1 befestigten Gehäuse gelagert ist, wobei die Welle zur Rolle 32 ein den Abstand $m_5$ anzeigendes Zählwerk antreibt, während das andere Ende des Seils 31 bei 33 und dem Zangenträger 2 verbunden ist. Mit dem Seil 31 können möglichst weit voneinander entfernte Punkte am Zangenträger 2 und am Wagen 1 verbunden werden, so daß der Winkel $\phi_5$ klein und der cos $\phi_5$ nahe dem Wert "1" bleibt. Beim einfachen, nicht programmierten Schmieden, bei dem die Höhenlage nicht erfaßt zu werden braucht, kann dann auf die Messung des Winkels $\phi_5$ und die Umrechnung des Abstandes $m_5$ mit dem cos $\phi_5$ verzichtet werden, da der Meßfehler gering ist.

Ein weiteres Ausführungsbeispiel einer Meßvorrichtung ist in Figur 7 dargestellt. Hier sind die vom Schwenklager des Winkelhebels 5 oder 4 und entweder zwischen dem Winkelhebel 5 oder 4 und der Pendelstange 7 oder 6 oder zwischen dem Zangenträger 2 und der Pendelstange 7 oder 6 gebildeten Gelenkpunkte mit Winkelkodierern versehen, die die Winkel $\alpha$ und $\beta$ oder die Winkel $\alpha$ und $\gamma$ messen und anzeigen. Der Kodierer zum Winkel $\alpha$ besteht aus einem am Wagen 1 befestigten Gehäuse 34 mit darin gelagertem Ritzel 35, in das ein mit der die Winkelhebel 5 oder 4 tragenden Welle 36 verbundenes Zahnsegment 37 eingreift. Der Kodierer zum Winkel $\beta$ besteht aus einem am Winkelhebel 5 oder 4 befestigten Gehäuse 38 mit darin gelagertem Ritzel 39, in das ein mit der Pendelstange 7 oder 6 verbundenes Zahnsegment 40 eingreift. Der Kodierer zum Winkel $\gamma$ besteht aus einem am Zangenträger 2 befestigten Gehäuse 41 mit darin gelagertem Ritzel 42, in das ein mit der Pendelstange 7 oder 6 verbundenes Zahnsegment 43 eingreift. Bei einer Länge r des Winkelhebels 5 oder 4 und einer Länge l der Pendelstange 7 oder 6 errechnen sich die Abstände $x_7$ und $y_7$ entweder mit

$$x = r \bullet \cos \alpha + 1 \bullet \text{sind} \ (\beta + \alpha - 90)$$
$$y = 1 \bullet \cos \ (\beta + \alpha - 90) - r \bullet \sin \alpha$$

oder mit

$$x = r \bullet \cos \alpha + 1 \bullet \sin \gamma$$
$$y = 1 \bullet \cos \gamma - r \bullet \sin \alpha$$

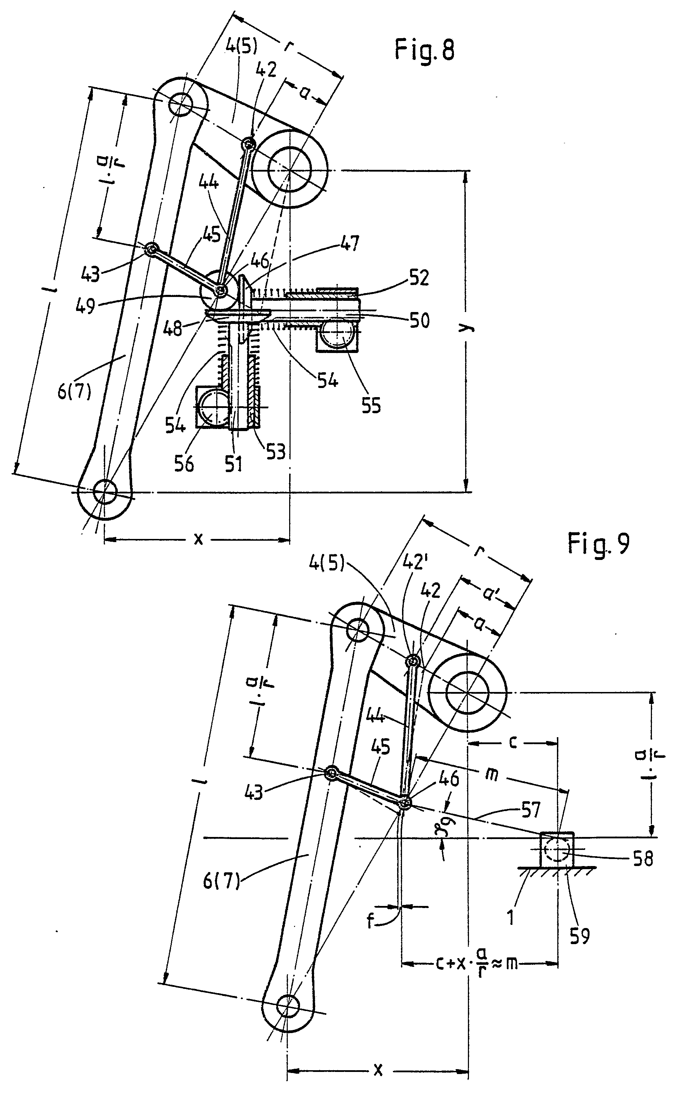

Die Meßvorrichtung nach dem in Figur 8 dargestellten Ausführungsbeispiel weist den besonderen Vorteil direkter Messung auf, was der Schnelligkeit der Steuerung besonders dienlich ist. An einer der

Winkelhebel 4 oder 5 ist bei 42 im Abstand a von der Schwenkachse des Winkelhebels 4 oder 5 ein Pendelgestänge 44 und an eine der Pendelstangen 6 oder 7 ist bei 43 im Abstand L • a/r vom Gelenkpunkt des Winkelhebels 4 bzw. 5 mit der Pendelstange 6 bzw. 7 bei einer Länge r des Winkelhebels 4 bzw. 5 und einer Länge 1 der Pendelstange 6 bzw. 7 ein Parallelgestänge 45 angelenkt, wobei das Parallelgestänge 44 eine Länge von L • a/r und das Parallelgestänge 45 eine Länge von r-a aufweist, so daß mit dem Abschnitt a des Winkelhebels 4 bzw.5 und dem Parallelgestänge 44 ein winkelgleiches verkleinertes Dreieck zu dem mit dem Winkelhebel 4 bzw. 5 und der Pendelstange 6 bzw. 7 gebildetes Dreieck entsteht und der Gelenkpunkt 46 zwischen den Parallelgestängen 44 und 45 in entsprechender Verkleinerung die Bewegung des Zangenträgers 2 gegenüber dem Wagen 1 unmittelbar anzeigt. Zur Messung der horizontalen und vertikalen Bewegung des Zangenträgers 2 sind Fühler 47 und 48 vorgesehen, die mit einer im Gelenkpunkt 46 gelagerten Rolle 49 in Berührungskontakt gehalten sind. Dazu ist jeder Fühler 47, 48 mit einem Stössel 50 bzw. 51 versehen, der Fühler 47 mit seinem Stössel 50 in einer waagerechten Führungshülse 52 und der Fühler 48 mit seinem Stössel 51 in einer senkrechten Führungshülse 53 geführt und es sind Federn 54 zwischen den Führungshülsen 52,53 und den Fühlern 47,48 angeordnet, die den Berührungskontakt der Fühler 47, 48 mit der Rolle 49 aufrechterhalten. Die Stössel 50 und 51 sind mit Verzahnungen versehen, über die sie mit Ritzeln 55 bzw. 56 in Eingriff stehen. Drehfeldgeber oder Potentiometer, die mit den Ritzeln 55 und 56 verbunden sind, messen den Hub der Stössel 50 und 51 und zeigen den Weg des Zangenträgers 2 gegenüber dem Wagen 1 in den Maßen x und y an.

Ebenfalls mit bei 42 an einen der Winkelhebel 4 oder 5 angelenktem Parallelgestänge 44 und bei 43 an eine der Pendelstangen 6 oder 7 angelenkten Parallelgestänge 45 ist die Meßvorrichtung versehen, nach dem in Figur 9 dargestellten Ausführungsbeispiel. An dem Gelenkpunkt 46 ist bei diesem Ausführungsbeispiel ein Seil 57 befestigt, welches von einer Rolle 58 aufgewickelt und straffgehalten ist, die in einem Gehäuse 59 gelagert ist, welches am Wagen 1 befestigt ist. Der Vorteil dieser Anordnung besteht darin, daß infolge der Anordnung der Parallelgestänge 44 und 45 im Storchschnabelprinzip der Gelenkpunkt 46 die Bewegung des Zangenträgers 2 in verkleinertem Maßstab wiedergibt, so daß im Vergleich zum Ausführungsbeispiel nach Figur 6 der horizontale Abstand der das Seil 57 aufwickelnden Rolle 58 zum Gelenkpunkt entsprechend kleiner gehalten werden kann, oder bei gleichem Abstand die Auslenkung $\gamma_9$ und der Meßfehler f geringer ist. Zur weiteren Verringerung des Meßfehlers ist gemäß Figur 9 die Anlenkung des Parallelgestänges 44 an den Winkelhebel 4 bzw. 5 von Punkt 42 zum Punkt 42' verlegt, wodurch sich die Länge m etwa im Ausmaß des Meßfehlers f verkürzt.

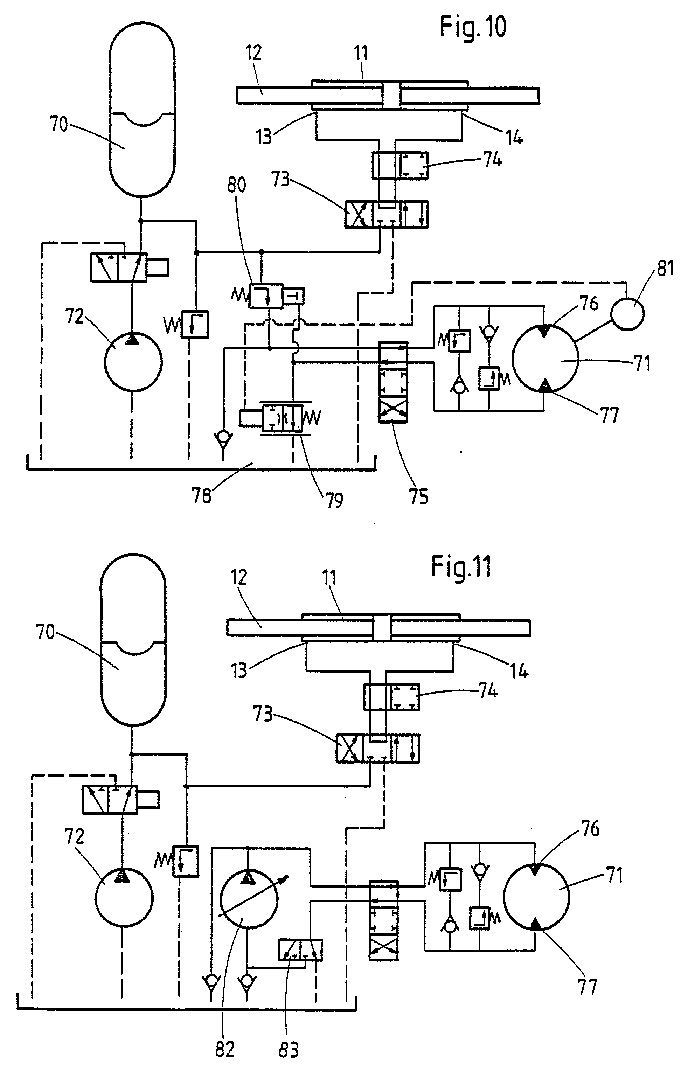

Als Fahrantrieb des Wagens 1 kann ein drehzahlgeregelter Elektromotor 15 dienen, bei dem eine gleichförmige Fahrgeschwindigkeit im Rahmen des Kippmomentes gegeben ist, wobei Schwankungen der vorgegebenen Motordrehzahl in relativ weiten Grenzen zugelassen sind, es aber dennoch von Vorteil ist, wenn der Fahrantrieb eine gewisse Stabilität aufweist. Mit Vorteil lassen sich dabei ölhydraulische Antriebe verwenden, wie sie die Ausführungsbeispiele nach den Figuren 10 und 11 zeigen.

Bei dem Ausführungsbeispiel nach Figur 10 werden von einem Ölspeicher 70 der Fahrantrieb mit dem Motor 71 ebenso gespeist, wie die Kolben-Zylinder- Einheiten 11/12 für die Verschiebung des Zangenträgers 2, wobei der Ölspeicher 70 von einer Pumpe 72 fortlaufend gespeist wird unter Aufrechterhaltung eines annähernd konstanten Drucks. Mit Hilfe eines Steuerventils 73 ist der Kolben im Zylinder 11 in der einen oder anderen Richtung beaufschlagbar oder es sind die durch den Kolben getrennten Zylinderräume miteinander verbindbar. Über ein weiteres Steuerventil 74 ist eine Absperrung der Zylinderräume und damit eine Verriegelung des Zangenträgers 2 im Wagen 1 möglich. Über ein Steuerventil 75 ist die Drehrichtung des Motors 71 zum Fahrantrieb umkehrbar und der Motor 71 festsetzbar. Da sich die Reaktionskräfte des Zylinders 11 für die Verschiebung des Zangenträgers 2 und die horizontalen Kraftkomponenten der Aufhängung bei schräg hängenden Pendelstangen 6 und 7 zu dem Fahrwiderstand addieren, ist ein dem Zangenträger 2 gegenläufiges Beschleunigen und Verzögern des Wagens 1 nur zu vermeiden, wenn an den Ölanschlüssen 76 und 77 des Motors 71 der jeweils erforderliche Druck hergestellt werden kann. Zu diesem Zwecke ist der Rücklaufleitung von der Steuerung 75 zum Ölbehälter 78, ein elektrisch ansteuerbares Regelventil 79 angeordnet. In der Zulaufleitung zwischen Ölspeicher 70, und Steuerventil 75 ist ferner ein durch Druck öffnendes Drosselventil 80 eingebaut. Darüberhinaus ist mit dem Motor 71 des Fahrantriebs ein Tachogenerator 81 gekoppelt. Erhöht sich der Fahrwiderstand beim Beschleunigen des Zangenträgers 2, verlangsamt sich die Wagenfahrt und der Tachogenerator 81 signalisiert dem Ventil 79 die Drosselung und damit den Gegendruck in der Rücklaufleitung zu vermindern. Damit wird auch der Steuerdruck des Drosselventils 80 vermindert, wodurch dieses Ventil weiter öffnet und der Druck sich in der Zulaufleitung erhöht. Dies geschieht solange, bis die dem Tachogenerator 81 vorgegebene Fahrgeschwindigkeit erreicht ist. Die Regelmöglichkeit ist erschöpft, wenn die Reaktionskräfte die max. mögliche Fahrantriebskraft übersteigen. Die Auslegung der Zangenverschiebekraft ist daher auf etwa diesen Wert vorgenommen. Wird der Zangenträger 2 durch Umschalten des Steuerventils 73 gebremst, kehren sich die Kraftrichtungen um und der Wagen 1 wird beschleunigt. Der Tachogenerator 81 signalisiert zu hohe Geschwindigkeit und das Regelventil 79 verstärkt die Drosselung solange, bis die vorgegebene Fahrgeschwindigkeit wieder erreicht ist. Dabei wird auch das Ventil 80 durch den ansteigenden Druck in der Rücklaufleitung stärker gedrosselt. Diese Schaltung führt dazu, daß in der Beschleunigungsphase am Anschluß 76 max. der volle Betriebsdruck auftreten kann, während der Anschluß 77 drucklos werden kann. In der Verzögerungsphase kehren sich die Verhältnisse um; d.h. der volle Betriebsdruck kann sich am Anschluß 77 aufbauen, während Anschluß 76 drucklos werden kann.

Auch bei dem in Figur 11 dargestellten Ausführungsbeispiel ist ein Ölspeicher 70 mit Speisepumpe 72 vorgesehen, von dem hier jedoch nur die Kolben- Zylinder- Einheit 11/12 für die Verschiebung des Zangenträgers 2 über die Steuerventile 73 und 74 gespeist wird. Der Motor 71 zum Fahrantrieb mit seinen Anschlüssen 76 und 77 sowie dem Steuerventil 75 wird bei diesem Ausführungsbeispiel von einer Pumpe 82 gespeist, deren Fördermenge regelbar ist. Der Motor 71 und die Pumpe 82 arbeiten in der Brems- und Beschleunigungsphase über ein Ventil 83 gesteuert in geschlossenem Kreislauf, wobei in der Bremsphase der Motor 71 als Pumpe und die Pumpe 82 als Motor arbeitet, der von dem als Generator arbeitenden Elektromotor zur Pumpe 82 gebremst wird bei entsprechender Druckentlastung am Anschluß 76 und entsprechendem Druckaufbau am Anschluß 77. Um laufend frisches Öl in diesen Kreislauf zu bringen, wird während der Schmiedephase das Rücköl über das Ventil 83 in den Ölbehälter geführt, aus dem dann auch die Pumpe 82 automatisch ansaugt.

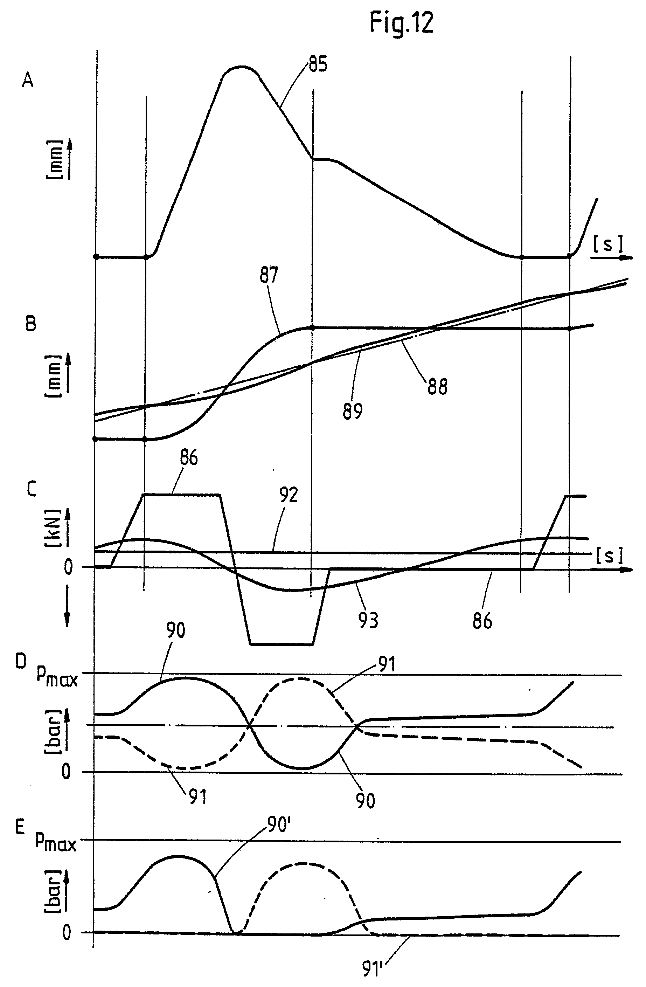

In Figur 12 sind über die Zeit (Abszisse) als Ordinaten dargestellt:

A    der Hub des Presswerkzeuges 19

B    der Weg des Wagens 1 und des Zangenträgers 2

C    Die Kolbenkraft im Zylinder 11, die als Fahrwiderstand wirkende Kraft und die Horizontalkomponente aus der Aufhängung des Zangenträgers 2

D    die Drücke an den Anschlüssen 76 und 77 zur Pumpe 71 nach Figur 10 und

E    nach Figur 11.

Der Hub des Presswerkzeuges 19 über die Zeit eines Zyklus ist von der Linie 85, in Figur 12 A dargestellt, wobei die Darstellung zu dem Zeitpunkt beginnt, in dem das Presswerkzeug 19 seine durch die gewollte Eindringtiefe bedingte unterste Stellung erreicht hat. Durch das Umsteuern der Presse hebt sich das Presswerkzeug 19 vom Werkstück ab. Etwa zeitgleich wird das Steuerventil 73 betätigt, so daß der Kolben im Zylinder 11 im Sinne des Vorschubs des Zangenträgers 2 beaufschlagt wird und die sich aufbauende von der Linie 86 in Figur 12 C dargestellte Kolbenkraft den Zangenträger 2 beschleunigt und entsprechend dem von der Linie 87 in Figur 12 B dargestellten Weg verfährt. Mit dem Umschalten des Steuerventils 73 wird der Kolben im Zylinder 11 entgegengerichtet beaufschlagt und der Zangenträger 2 abgebremst. Inzwischen ist auch die Presse umgesteuert worden und das Presswerkzeug 19 bewegt sich abwärts, wobei die Abbremsung des Zangenträgers 2 und die Absenkung des Presswerkezuges 19 so aufeinander abgstimmt sind, daß das Werkzeug 19 auf das Werkstück aufsetzt, wenn der Zangenträger 2 mit dem Werkstück zur Ruhe gekommen ist. Während das Werkzeug 19 in das Werkstück eindringt, befindet sich das Steuerventil 73 in der die Räume beiderseits des Kolbens im Zylinder 11 verbindenden Schaltstellung. Die Linie 88 in Figur 12 B stellt die mittlere Fahrgeschwindigkeit des Manipulatorwagens 1 dar. Während der Beschleunigung und während des Vorschubes des Zangenträgers 2 führt die Raktionskraft zur Kolbenkraft 66 zu einem Absinken der durch die Linie 89 dargestellten momentanen Fahrgeschwindikgeit unter die mittlere Fahrgeschwindigkeit 88 und über den Tachogenerator 81 wird die Regelung über die Steuerventile 79 und 80 ausgelöst, wobei sich der Druck 90 am Anschluß 76 zum Motor 71 erhöht und der Druck 92 am Anschluß 77 zum Motor 71 abfällt, wie dies die Linien 90 und 91 in Figur 12 D zeigen. Umgekehrt führt die Reaktionskraft zur Kolbenkraft 66 während des Abbremsens des Zangenträgers 2 zu einem Ansteigen der momentanen Fahrgeschwindigkeit 89 über die mittlere Fahrgeschwindigkeit 88 und über den Tachogenerator 81 wird die Regelung über die Steuerventile 79 und 80 ausgelöst, die zum Abfall des Drucks 90 und zum Ansteigen des Drucks 91 führt. In Figur 12 C ist desweiteren durch die Linie 92 der gleichbleibende Fahrwiderstand des Wagens 1 und durch die Linie 93 die Horizontalkomponente der Gewichtskraft an den Pendelstangen 6 und 7 dargestellt. Die Druckverläufe an den Anschlüssen 76 und 77 zum Motor 71 im Ausführungsbeispiel nach Figur 11 sind in Figur 12 E mit 90' und 91' dargestellt.

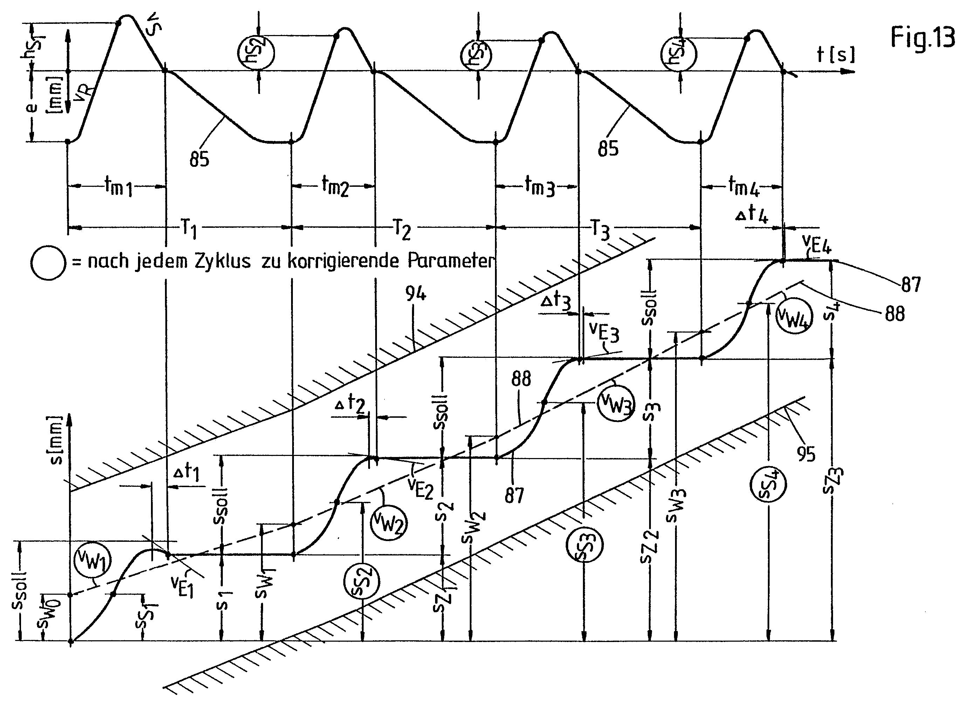

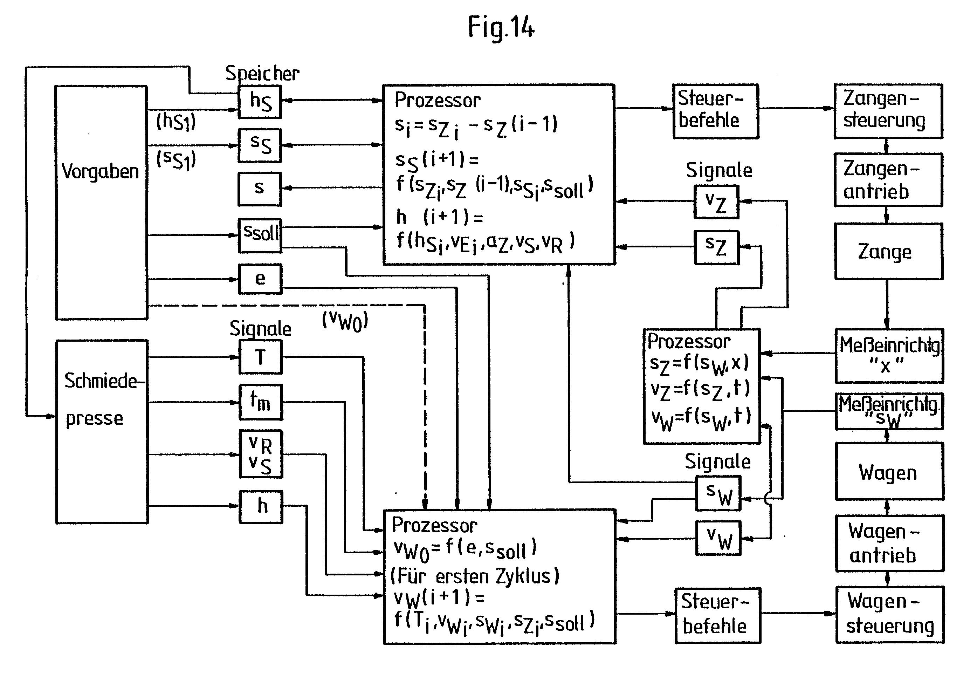

In Figur 13 ist in einem Schaubild und in Figur 14 ist in einem Blockschaltbild der Steuerungsablauf für einen Manipulator und die mit diesem zusammenwirkende Schmiedepresse dargestellt. Ausgehend von den für ein Schmiedeprogramm geltenden Vorgaben, nämlich dem sich aus dem Schmiedehub (Eindringtiefe) e und dem aufwährts gerichteten Leerhub $h_s$ als Schaltpunkt für den Pressenrückhub zusammensetzenden Gesamthub der Presse, dem Schmiedeschritt (Biss) $s_{soll}$ und einem vom Schmiedeschritt abhängenden Schaltweg $s_s$ für die Umsteuerung des Verschiebeanhiebes für den Zangenträger 2 von "Vorschub" auf 'Bremsen", sowie der sich als Funktion der Eindringtiefe e und des Schmiedeschrittes $s_{soll}$ ergebenden Ausgangsgeschwindigkeit $v_{wo}$ für die Fahrt des Manipulatorwagens 1, beginnt der erste Zyklus mit der Freigabe des Schmiedestücks 20 durch das sich abhebende obere Werkzeug 19, dessen Bewegungsverlauf im oberen Teil der Figur 13 durch die Linie 85 dargestellt ist. Mit der Freigabe des Schmiedestückes 20 wird die von der Kolben- Zylinder- Einheit 11/12 auf den Zangenträger 2 mit dem Schmiedestück 20 wirkende Vorschubkraft wirksam und verschiebt den Zangenträger 2 mit dem Schmiedestück 20, deren Weg von der Linie 87 im untersten Teil der Figur 13 dargestellt ist. Nachdem der Zangenträger 2 den Schaltweg $s_{s1}$ zurückgelegt hat, der so bemessen ist, daß er zusammen mit dem Bremsweg das Sollmaß des Schmiedeschrittes $s_{soll}$ ausmacht, wird der Steuerbefehl "Bremsen" an die Zangensteuerung erteilt, die das Steuerventil 73 in die entsprechende Stellung verbringt. Das obere Werkzeug 19 erreicht bei seiner Hubbewegung um $h_s$ den Schaltpunkt für die Einleitung des Pressensenkhubes, wobei dieser Schaltpunkt so gewählt ist, daß das Aufsetzen des oberen Werkzeuges 19 auf das Schmiedestück 20 und damit das Einfangen zu einem Zeitpunkt erfolgt, in dem das Schmiedestück 20 relativ zu den Schmiedewerkzeugen 18 und 19 zur Ruhe oder nahezu zur Ruhe gekommen ist, d.h., die aus den Meßwerten x und $s_w$ sowie der Zeit t errechnete Geschwindigkeit $v_z$ gleich oder annähernd "Null" beträgt. Der sich nach dem Einfangen des Schmiedestückes 20 durch die Werkzeuge 18 und 19 ergebende Zangenschritt $s_1$ wird mit dem Sollwert $s_{soll}$ verglichen und entsprechend der Schaltweg $s_{s2}$ für den zweiten Zyklus vorgegeben. Ferner wird im Zeitpunkt des Einfangens des Schmiedestückes 20 durch die Werkzeuge 18 und 19 überprüft, ob sich der Zangenträger 2 zu diesem Zeitpunkt in Ruhe befindet ($v_z = 0$) oder der Ruhezustand um $\Delta t$ noch nicht erreicht oder bereits überschritten ist, was sich im positiven oder negativen Wert der Geschwindigkeit $v_E$ des Zangenträgers 2 während des Einfangens des Schmiedestückes 20 ausdrückt, und entsprechend wird der Schaltpunkt der Hubumkehr der Presse im Hubweg $h_s$ beibehalten, zurück-oder vorverlegt unter entsprechender Anpassung der Manipulierzeit $t_{m2}$ und der Zykluszeit $T_2$. Entsprechend wird von Zyklus zu Zyklus verfahren.

Wie ersichtlich sind die Steuerungssignale nur von der Position des Zangenträgers 2 mit dem Schmiedestück 20 relativ zur Presse und von der Stellung der Werkzeuge 18 und 19 in der Presse abhängig und die jeweilige Stellung des Manipulatorwagens 1 ist hierbei unmittelbar ohne Einfluß, jedoch ist das Ausmaß der Auslenkung der den Zangenträger 2 im Wagen 1 führenden Pendelstangen 6 und 7 außer von der Zykluszeit T und dem Schmiedeschritt s davon abhängig, wie genau die Fahrgeschwindigkeit $v_w$ des Wagens 1 der sich aus Zykluszeit T und Schmiedeschritt s ergebenden Arbeitsgeschwindigkeit entspricht. Abhängig vom Wagenweg, der im unteren Teil der Figur 13 durch die Linie 88 dargestellt ist, ergibt sich im Rahmen maximal zulässiger Auslenkung der Pendelstangen 6 und 7 ein durch die Linien 94 und 95 im unteren Teil der Figur 13 dargestellter Korridor, in dem die Fahrt des Zangenträgers 2 stattfinden kann. Um die Auslenkung der Pendelstangen 6 und 7 zu minimieren wird die Fahrgeschwindigkeit $v_w$ des Wagens 1 zu jedem Zyklus korrigiert und dem Wert angepasst, der sich aus der vorausberechneten Zykluszeit $T_{i+1}$ und dem Zangenschritt $s_{soll}$ ergibt.

## Ansprüche

1. Integrierte Steuerung für einen Manipulator und eine mit diesem zusammenwirkende Freiform-Schmiedepresse, wobei der Manipulatorwagen kontinuierlich verfahren und der das Schmiedestück mit seiner Zange aufnehmende Zangenträger im Manipulatorwagen pendelnd aufgehängt ist und mit Unterbrechung während des Kontaktes des Schmiedestückes mit den Schmiedesätteln (-werkzeugen) bewegt wird,
dadurch gekennzeichnet,
daß in unabhängig von einer bestimmten Position des Manipulatorwagens, abhängig von dem Abstand des Zangenträgers zur Schmiedepresse mit dem Entlasten der Schmiedepresse beginnenden Zyklen, der Beschleunigung und der Fahrt des Zangenträgers nach dem Durchfahren eines Schaltwagens $s_s$ folgend die Abbremsung des Zangenträgers so eingeleitet wird, daß der Zangenträger sich gegenüber der Presse nahezu in Ruhelage befindet wenn die Manipulierzeit $t_m$ abgelaufen bzw. die Arbeitsbereitschaft der Presse des "slow-down-Punktes" oder den Druckanstieg im Presszylinder angezeigt ist und die Schmiedewerkzeuge das Werkstück greifen, wobei aus dem Vergleich des Sollwertes $s_{soll}$ mit dem Istwert $s_i$ des Zangenschrittes eine Korrektur des Schaltweges $s_{s\,(i+1)}$ im folgenden Zyklus, aus der positiven oder negativen Zangengeschwindigkeit $v_z$ eine Korrektur des Schaltpunktes $h_s$ für die obere Hubumkehr der Presse und durch den sich aus dem Vergleich des Zangenweges $s_{z\,i}$ und des Weges $s_{w\,i}$ des Manipulatorwagens ergebenden positiven oder negativen Wert $\Delta s$ und der Zeit $T_i$ des Zyklus eine Korrektur der Fahrgeschwindigkeit $v_w$ des Manipulatorwagens abgeleitet wird.

2. Steuerung nach Anspruch 1,
dadurch gekennzeichnet,
daß der Abstand ($s_z$) des Zangenträgers (2) zur Schmiedepresse wie bekannt durch eine die Position des Zangenträgers (2) im Manipulatorwagen (1) messende Vorrichtung und eine den Abstand des Manipulatorwagens (1) zur Schmiedepresse messende Vorrichtung sowie Summierung der Meßwerte ermittelt wird.

3. Steuerung nach Anspruch 1 oder 2,
dadurch gekennzeichnet,
daß bei ölspeicherbetriebenem Fahrantrieb (Fig.10) des Manipulatorwagens (1) die Fahrgeschwindigkeit über einen mit dem Fahrantrieb verbundenen Tachogenerator (81), in Verbindung mit einem Regelventil (79) und einem Drosselventil (80) annähernd konstant gehalten wird, indem am Motor (71) des Fahrantriebes während der Beschleunigung des Zangenträgers (2) der Eingangsdruck erhöht und der Ausgangsdruck gesenkt und während der Verzögerung des Zangenträgers (2) der Eingangsdruck gesenkt und der Ausgangsdruck erhöht wird.

4. Im Zusammenwirken mit einer Freiformschmiedepresse gesteuerter Manipulator nach Anspruch 1, 2 oder 3
dadurch gekennzeichet,
daß den Zangenträger (2) im Manipulatorwagen (1) bewegende Kolben-Zylinder- Einheiten (11/12), vorgesehen sind, die wie an sich bekannt, beidseitig beaufschlagbare Kolben mit durchgehenden Kolbenstangen (12) und Zylinder (11) mit durchgehenden, den maximalen Pendelausschlag des Zangenträgers (2) zulassenden Bohrung aufweisen, deren durch die Kolben getrennte Zylinderräume mit ihren Anschlüssen (18,19) über ein Steuerventil (73) wahlweise beaufschlagbar oder miteinander verbindbar sind.

5. Im Zusammenwirken mit einer Freiform-Schmiedepresse gesteuerter Manipulator mit ölspeicherbetriebenem Fahrantrieb, nach einem der vorhergehenden Ansprüche,
dadurch gekennzeichnet,
daß in der Rücklaufleitung vom Fahrmotor (71) ein von einem die Fahrgeschwindigkeit registrierenden, mit dem Fahrmotor (71) gekuppeltem Tachogenerator (81) geregeltes Drosselventil (79) angeordnet ist, und von der Rücklaufleitung zwischen einem dem Fahrmotor (71) vorgeschaltetem Steuerventil (75) und dem Drosselventil (79) eine Steuerleitung abzweigt, die mit einem in der Zulaufleitung vor dem Steuerventil (75) angeordneten, durch hydraulichen Druck aus der Steuerleitung entsperrbaren Regelventil (80) verbunden ist.

6. Meßvorrichtung zur Steuerung nach Anspruch 2
dadurch gekennzeichnet,
daß diese aus einem Parallelgestänge (44,45) besteht, dessen Gelenkpunkt (46) die Zangenbewegung in wesentlich kleinerem Maßstab abbildet, sowie aus zwei Wegaufnehmern, die aus einem Stößel (50,51) mit Zahnstange bestehen, die dem Gelenkpunkt (46) entweder horizontal oder vertikal folgen und deren Zahnstangen mit Ritzeln (55,56) verbundene elektronische Wegaufnehmer antreiben, wobei die Stößel (50,51) durch Federkraft (54) gegen den Gelenkpunkt (46) gerichtet werden, oder durch in (46) gelagerte Gleitsteine, die in entsprechenden Kulissen der Stößel (50,51) eingreifen, mitgenommen werden.

Fig.1

Fig. 2

Fig. 3

## Fig. 4

## Fig. 5

## Fig. 6

## Fig. 7

Fig. 8

Fig. 9

Fig.10

Fig.11

## Fig.12

Fig.13

○ = nach jedem Zyklus zu korrigierende Parameter

EP 0 307 883 A2

Fig.14

Zangen-steuerung

Zangen-antrieb

Zange

Meßeinrichtg. "x"

Meßeinrichtg. "sW"

Wagen

Wagen-antrieb

Wagen-steuerung

Steuer-befehle

Signale

$v_Z$

$s_Z$

Prozessor
$s_Z = f(s_W, x)$
$v_Z = f(s_Z, t)$
$v_W = f(s_W, t)$

Signale

$s_W$

$v_W$

Steuer-befehle

Prozessor
$s_i = s_{Z_i} - s_Z(i-1)$
$s_S(i+1) = f(s_{Z_i}, s_Z(i-1), s_{S_i}, s_{soll})$
$h(i+1) = f(h_{S_i}, v_{E_i}, a_Z, v_S, v_R)$

Prozessor
$v_{W_0} = f(e, s_{soll})$
(Für ersten Zyklus)
$v_W(i+1) = f(T_i, v_{W_i}, s_{W_i}, s_{Z_i}, s_{soll})$

Speicher

$h_S$   $s_S$   $s$   $s_{soll}$   $e$

Signale

$T$   $t_m$   $v_R$   $v_S$   $h$

Vorgaben

$(h_{S_i})$

$(s_{S_i})$

$(v_{W_0})$

Schmiede-presse